Europäisches Patentamt

European Patent Office

Office européen des brevets

(19)

(11) Numéro de publication: **0 030 883**
**B1**

(12) **FASCICULE DE BREVET EUROPEEN**

(45) Date de publication du fascicule du brevet: **28.09.83**

(51) Int. Cl.³: **B 60 T 11/10, B 62 D 11/08**

(21) Numéro de dépôt: **80401702.8**

(22) Date de dépôt: **28.11.80**

(54) Ensemble distributeur de fluide.

(30) Priorité: **07.12.79 FR 7930095**

(43) Date de publication de la demande:
**24.06.81 Bulletin 81/25**

(45) Mention de la délivrance du brevet:
**28.09.83 Bulletin 83/39**

(84) Etats contractants désignés:
**DE GB IT**

(56) Documents cités:
**DE - A - 2 059 037**
**FR - A - 2 122 609**
**FR - A - 2 249 789**

(73) Titulaire: **SOCIETE ANONYME D.B.A.**
**Centre Paris Pleyel**
**F-93521 St-Denis Cédex 01 (FR)**

(72) Inventeur: **Muterel, Roland**
**5, résidence Les Beaux Lieux**
**F-95550 Bessancourt (FR)**

(74) Mandataire: **Poidatz, Emmanuel et al,**
**Service Brevets Bendix 44 rue François 1er**
**F-75008 Paris (FR)**

Courier Press, Leamington Spa, England.

EP 0 030 883 B1

Ensemble distributeur de fluide

L'invention a pour objet un ensemble distributeur de fluide sous pression destiné à être interposé entre deux sources de fluide sous pression et un circuit de service. A titre d'application, l'invention a également pour objet un système de freinage pour véhicule composé d'un tracteur et d'une remorque incorporant un tel ensemble distributeur. Dans certains véhicules, notamment à usage agricole, il est courant de prévoir deux circuits de freinage indépendants, l'un desservant un ou plusieurs moteurs de freins associés à une roue ou plusieurs roues situées d'un côté du véhicule et l'autre desservant un ou plusieurs moteurs de freins associés à une ou plusieurs roues situées de l'autre côté du véhicule, les deux circuits pouvant être mis simultanément sous pression pour assurer un freinage proprement dit du véhicule, ou séparément, afin de provoquer des changements de direction du véhicule, ou de procurer une assistance à ces derniers.

Lorsque le véhicule comporte un circuit de freinage complémentaire desservant des moteurs de freins associés à des roues situées de part et d'autre de véhicule (et/ou d'une remorque, dans le cas d'un véhicule composé d'un tracteur et d'une remorque), il y a lieu de différencier, en ce qui concerne ce circuit de freinage complémentaire, les actions de freinage dites de "ralentissement" lors desquelles les moteurs de freins desservis par les deux circuits de freinage sus-mentionnés sont commandés simultanément et pour lesquelles on désire également commander les moteurs de frein associés au circuit de freinage complémentaire, des actions de freinage dites "directionnelles" lors desquelles seuls les moteurs de freins desservis par l'un des deux circuits de freinage sus-mentionnés sont commandés et pour lesquelles on ne désire pas commanders les moteurs de freins associés au circuit de freinage complémentaire.

A cet effet, il es connu, notamment du brevet DE—A—2059037, d'incorporer dans le système de freinage du véhicule, un ensemble distributeur du type comprenant un boîtier dans lequel sont définies d'une part une première et une seconde chambres d'entrée prévues pour être reliées respectivement à deux sources indépendantes de fluide sous pression, qui, à titre d'application, peuvent être deux maître-cylindres à commande séparée, et d'autre part une chambre de sortie prévue pour être reliée à un circuit de service, qui, à titre d'application, peut être le circuit de freinage complémentaire, l'ensemble distributeur comprenant des moyens permettant la mise sous pression de la chambre de sortie par communication avec l'une au moins desdites chambres d'entrée lorsque ces dernières sont simultanément alimentées par du fluide sous pression, lesdits moyens comprenant un passage reliant ladite chambre de sortie à la chambre d'entrée considérée, un clapet monté dans ledit passage, et un élément de commande coopérant avec ledit clapet.

On remarquera que cet ensemble distributeur présente les deux inconvénients suivants:

Lors d'une action de freinage "directionnelle" vers la gauche, la communication qui existe au repos entre la chambre d'entrée reliée au maître-cylindre "gauche" et la chambre de sortie n'est interrompue que lorsque la pression de freinage atteint un seuil prédéterminé. Ceci a pour conséquence de permettre l'admission vers le circuit de freinage complémentaire de fluide sous une pression égale à ce seuil prédéterminé.

Par ailleurs, la valve normalement ouverte, qui commande le passage entre la chambre d'entrée, reliée au maître-cylindre "gauche", et la chambre de sortie, présente l'inconvénient suivant: si pour une raison quelconque le piston de commande de la valve ne peut se déplacer, toute action de freinage "directionnelle" vers la gauche sera systématiquement accompagnée d'une mise sous pression du circuit de freinage complémentaire.

Afin de pallier ces inconvénients, la présente invention propose un ensemble distributeur du type défini à avant dans l'art antérieur, caractérisé en ce que ledit clapet consiste en un clapet anti-retour empêchant au repos l'écoulement de fluide depuis ladite chambre d'entrée vers ladite chambre de sortie, et que ledit élément de commande consiste en piston monté coulissant dans ledit boîtier et soumis sur ses deux faces aux pressions régnant respectivement dans ladite chambre de sortie et dans l'autre chambre d'entrée. De la sorte, le clapet étant fermé au repos, le freinage "directionnel" n'est pas tributaire du déplacement du piston, donc des risques de mauvais fonctionnement, comme cela est le cas dans l'art antérieur.

A titre d'application, l'invention concerne également un système de freinage pour véhicule composé d'un tracteur et d'une remorque incorporant un tel ensemble distributeur, conformément à la revendication 4.

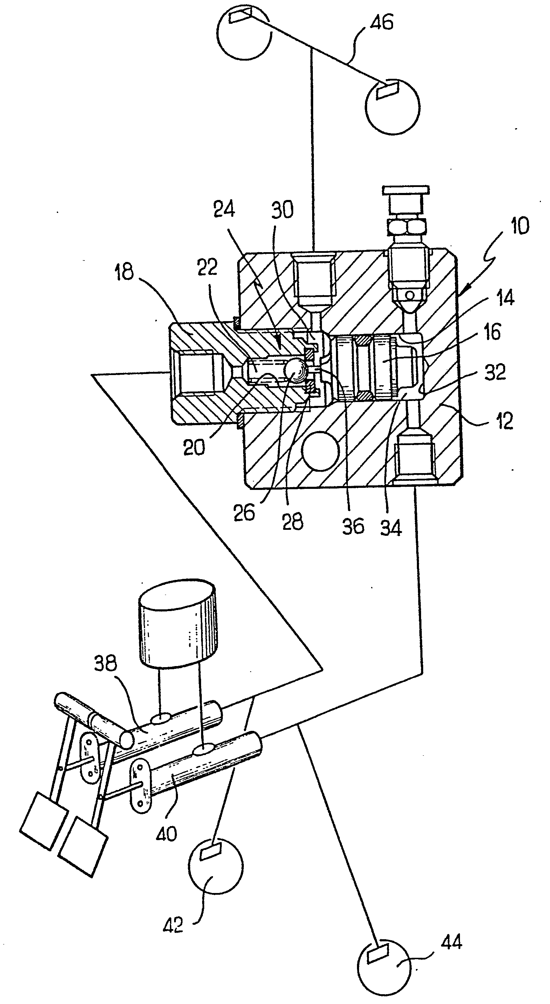

L'invention sera maintenant décrite en se référant à la figure unique des dessins qui représente un système de freinage incorporant un ensemble distributeur selon l'invention, vu en coupe longitudinale

Si l'on se reporte à cette figure, un ensemble distributeur 10 comprend un boîtier 12 percé d'un alésage borgne 14, dans lequel coulisse un élément de commande ou piston 16. L'alésage 14 est refermé par un bouchon 18 traversé par un passage axial 20 constituant une première chambre d'entrée 22. A l'extrémité du passage 20 situé du côté de l'alésage 14 est monté un clapet antiretour 24 constitué par une bille 26 rappelée élastiquement vers un siège 28 fixé à l'intérieur du passage 20 et empêchant le passage de fluide depuis la première chambre d'entrée 22 vers une chambre de sortie 30 définie entre le bouchon 18 et le piston 16. Entre le piston 16 et le fond 32 de l'alésage 14 est définie une seconde chambre d'entrée 34. Enfin, le piston 16 comporte une projection axiale 36, s'étendant en direction de la bille 26, la longueur totale du piston 16 et de sa projection 36 étant inférieure à la distance qui sépare la bille 26 du fond 32 de l'alesage 14.

Les deux chambres d'entrée 22 et 34 sont reliées respectivement à deux sources indépendantes de fluide sous pression, illustrées à la figure comme étant deux maître-cylindres 38 et 40, à com.nande séparée, qui sont également reliés respectivement à un premier et un second circuits de freinage desservant des moteurs de freins associés aux roues 42 et 44 situées d'un côté 42 et de l'autre 44 du véhicule.

La chambre de sortie 30 est reliée à un circuit de service, illustré à la figure comme étant un troisième circuit de freinage 46 desservant au moins une paire de moteurs de freins associés à des roues situées de part et d'autre, soit du véhicule lui-même, soit d'une remorque lorsque le véhicule est du type comprenant un tracteur et une remorque.

Comme il apparaîtra clairement lors de la description du fonctionnement de l'ensemble du distributeur, le passage 20, le clapet 24 et le piston 16 constituent des moyens permettant la mise sous pression de la chambre de sortie 30 par communication avec l'une 22 au moins des chambres d'entrée 22 et 34 lorsque ces dernières sont simultanément alimentées par du fluide sous pression.

Ce fonctionnement peut être schématisé par les trois phases suivantes:

—première phase: lorsque le système est au repose, les pressions régnant dans les deux maître-cylindres 38 et 40 et, par conséquent, les pressions régnant dans les deux chambres d'entrée 22 et 34 sont nulles, le clapet 24 est fermé et les pressions régnant dans les trois circuits de freinage sont nulles.

—seconde phase: seul l'un des deux maître-cylindres 38 et 40 est actionné:

a) s'il s'agit du maître-cylindre 38, le premier circuit de freinage 42 et la première chambre d'entrée 22 sont alimentés par du fluide sous pression tandis que la pression régnant dans le second circuit de freinage 44 et la seconde chambre d'entrée reste nulle, le clapet 24 reste fermé et la pression régnant dans la chambre de sortie 30 ainsi que dans le troisième circuit de freinage 46 reste également nulle. Il y a donc freinage "directionnel" du véhicule (ou du tracteur) sans alimentation du troisième circuit de freinage du véhicule (ou de la remorque).

b) s'il s'agit du maître-cylindre 40, le second circuit de freinage 44 et la seconde chambre d'entrée 34 sont alimentés par du fluide sous pression, il en résulte que le piston 16 est repoussé par cette pression en direction du clapet 24 et provoque l'ouverture de ce dernier. Mais comme la pression régnant dans le premier circuit de freinage 42 et la première chambre d'entrée 22 reste nulle, il en est de même pour la chambre de sortie 30 et le troisième circuit de freinage 46. Il y a donc freinage "directionnel" opposé du véhicule (ou du tracteur) sans alimentation du troisième circuit de freinage du véhicule (ou de la remorque).

—troisième phase: les maître-cylindres 38 et 40 sont actionnés simultanément, le premier et le second circuits de freinage 42 et 44 ainsi que la première et la seconde chambres d'entrée 22 et 34 sont alimentés par du fluide sous pression. Le piston 16, repoussé en direction du clapet 24, par la pression régnant dans la seconde chambre d'entrée 34 provoque l'ouverture du clapet 24, ce qui permet l'écoulement de fluide sous pression depuis la première chambre d'entrée 22 vers la chambre de sortie 30 et le troisième circuit de freinage 46. Il y a donc freinage simultané des roues associées aux trois circuits de freinage.

**Revendications**

1. Ensemble distributeur (10) comprenant un boîtier (12) dans lequel sont définies une première et une seconde chambres d'entrée (22, 34) prévues pour être reliées respectivement à deux sources indépendantes de fluide sous pression (38, 40) et une chambre de sortie (30) prévue pour être reliée à un circuit de service (46) et des moyens permettant la mise sous pression de ladite chambre de sortie (30) par communication avec l'une desdites chambres d'entrée (22) lorsque ces dernières (22, 34) sont simultanément alimentées par du fluide sous pression, lesdits moyens comprenant un passage (20) reliant ladite chambre de sortie (30) à la chambre d'entrée (22) considérée, un clapet (24) monté dans ledit passage (20), et un élément de commande (16) coopérant avec ledit clapet (24), caractérisé en ce que ledit clapet (24) consiste en un clapet anti-retour empêchant au repos l'écoulement de fluide depuis ladite chambre d'entrée (22) vers ladite chambre de sortie (30), et que ledit élément de commande (16) consiste en un piston monté coulissant dans ledit boîtier (12) et soumis sur ses deux faces aus pressions régnant respectivement dans ladite chambre de sortie (30) et dans l'autre chambre d'entrée (34).

2. Ensemble distributeur selon la revendication 1 caractérisé en ce que ledit clapet (24) comporte un élément de fermeture en forme de bille (26) située du côté de la chambre d'entrée (22) et sollicitée élastiquement en direction d'un siège (28) défini dans ledit passage (20) et situé du côté de ladite chambre de sortie (30).

3. Ensemble distributeur selon la revendication 2 en ce que ledit piston (16) comporte une projection axiale (36) s'étendant en direction de ladite bille (26).

4. Application de l'ensemble distributeur selon l'une quelconque des revendications 1 à 3 à un système de freinage pour véhicule du type comportant un tracteur et une remorque, caractérisée en ce que ledit système comprend un premier et un second maître-cylindres (38, 40) à commande séparée montés sur ledit tracteur et reliés respectivement à un premier et un second circuits de freinage desservant un premier et un second groupes de moteurs de freins (42, 44) associés respectivement aux roues situées d'un côté et de l'autre du tracteur, lesdits maître-cylindres constituant lesdites sources indépendantes de fluide sous pression reliées respectivement auxdites première et seconde chambres d'entrée (22, 34) dudit ensemble distributeur (10), et ledit système de freinage comprenant un troisième circuit de freinage (46) desservant un troisième groupe de moteurs de freins associés aux roues de la remorque, ledit troisième circuit de freinage constituant ledit circuit de service relié à ladite chambre de sortie (30) de l'ensemble distributeur.

5. Application de l'ensemble distributeur selon l'une quelconque des revendications 1 à 3 à un système de freinage pour véhicule, caractérisée en ce que ledit système comprend un premier et un second maître-cylindres (38, 40) à commande séparée montés sur ledit véhicule et reliés respectivement à un premier et à un second circuits de freinage desservant un premier et un second groupe de moteurs de freins (42, 44) associés respectivement aux roues situées d'un côté et de l'autre du véhicule, lesdits maître-cylindres constituant lesdites sources indépendantes de fluide sous pression reliées respectivement auxdites première et seconde chambres d'entrée (22, 34) dudit ensemble distributeur (10), et ledit système de freinage comprenant un troisième circuit de freinage (46) desservant un troisième groupe de moteurs de freins associés à au moins une paire de roues situées de part et d'autre du véhicule, ledit troisième circuit de freinage constituant ledit circuit de service relié à ladite chambre de sortie (30) de l'ensemble distributeur, (10).

## Claims

1. Distributor unit (10) comprising a housing (12) in which are defined a first and a second inlet chambers (22, 34) provided for connection respectively to two independent sources of fluid under pressure (38, 40), and an outlet chamber (30) provided for connection to a work circuit (40), and means for allowing pressurization of said outlet chamber (30) by connection with one of said inlet chambers (22) when the inlet chambers (22, 34) are simultaneously supplied with fluid under pressure, said means comprising a passage (20) connecting the outlet chamber (30) to the considered inlet chamber (22), a valve (24) provided in said passage (20), and a control member (16) cooperating with said valve (24), characterized in that said valve (24) consists of a non-return valve preventing, at rest, flow of fluid from said inlet chamber (22) towards the outlet chamber (30) and that said control member (16) consists of a piston slidably mounted in said housing (12) and subjected on its two faces to the pressures prevailing respectively in said outlet chamber (30) and in the other inlet chamber (34).

2. Distributor unit according to claim 1, characterized in that said valve (24) comprises a closure member in the shape of a ball (26) located on the side of the inlet chamber (22) and resiliently urged towards a seat (28) defined in said passage (20) on the side of said outlet chamber (30).

3. Distributor unit according to claim 2, characterized in that said piston (16) comprises an axial extension (36) projecting towards said ball (26).

4. Application of a distributor unit according to any one of claims 1 to 3, to a braking system of a vehicle comprised of a tractor and a trailor, characterized in that said system comprises a first and a second master cylinders (38, 40) separately controllable, mounted on the tractor and connected respectively to a first and a second braking circuits supplying a first and a second sets of brake actuators (42, 44) respectively associated with the wheels located on one side and on the other side of the tractor, said master cylinders forming said independent sources of fluid under pressure connected respectively to said first and second inlet chambers (22, 34) of said distributor unit (10), and said braking system comprising a third braking circuit (46) supplying a third set of brake actuators associated with the wheels of the trailor, said third braking circuit forming said work circuit connected to the outlet chamber (30) of the distributor unit.

5. Application of a distributor unit according to any one of claim 1 to 3 to a vehicle braking system, characterized in that said system comprises a first and a second master cylinders (38, 40) separately controllable, mounted on said vehicle and connected respectively to a first and a second braking circuits supplying a first and a second sets of brake actuators (42, 44) respectively associated with wheels located on one side and on the other side of the vehicle, said master cylinders forming said independent sources of fluid under pressure connected respectively to said first and second unlet chambers (22, 34) of said distributor unit (10), and said braking system comprising a third braking circuit (46) supplying a third set of brake actuators associated with at least a pair of wheels situated either sides of the vehicle, said third braking circuit forming said work circuit connected to the outlet chamber (30) of the distributor unit (10).

**Patentansprüche**

1. Verteilerventileinheit (10) mit einem Gehäuse (12), in dem eine erste und eine zweite Einlaßkammer (22, 34), die an zwei unabhängige Druckmittelquellen (38, 40) anschließbar sind, sowie eine Auslaßkammer (30) gebildet sind, die an einem Verbraucherkreis (46) anschließbar ist, und Mitteln, die eine Druckbeaufschlagung der Auslaßkammer (30) durch Verbinden mit einer der Einlaßkammern (22) ermöglichen, während die letzteren (22, 34) gleichzeitig mit Druckmittel versorgt werden, wobei die besagten Mittel bestehen aus einem Kanal (20), der die Auslaßkammer (30) mit der betrachteten Einlaßkammer (22) verbindet, einem Ventil (24), das in dem Kanal (20) angeordnet ist, sowie einem Steuerglied (16), das mit dem Ventil (24) zusammenwirkt, dadurch gekennzeichnet, daß das Ventil (24) aus einem Einwegventil besteht, das in der Ruhestellung eine Strömung von der besagten Einlaßkammer (22) zu der Auslaßkammer (30) verhindert, und daß das Steuerglied (16) aus einem Kolben besteht, der im Gehäuse (12) gleitend gelagert ist und an seinen Stirnseiten den Drücken ausgesetzt ist, die in der Auslaßkammer (30) und in der anderen Einlaßkammer (34) herrschen.

2. Verteilerventileinheit nach Anspruch 1, dadurch gekennzeichnet, daß das Ventil (24) ein Verschlußglied in Form einer Kugel (26) aufweist, die auf der Seite der Einlaßkammer (22) angeordnet ist und in Richtung auf einen Sitz (28) elastisch vorgespannt wird, der im Kanal (20) gebildet und auf der Seite der Auslaßkammer (30) angeordnet ist.

3. Verteilerventileinheit nach Anspruch 2, dadurch gekennzeichnet, daß der Kolben (16) einen axialen Vorsprung (36) aufweist, der sich in Richtung auf die Kugel (26) erstreckt.

4. Anwendung der Verteilerventileinheit nach einem der Ansprüche 1 bis 3 bei einer Bremsanlage für ein Fahrzeug mit einer Zugmaschine und einem Anhänger, dadurch gekennzeichnet, daß die Bremsanlage einen ersten und einen zweiten Hauptbremszylinder (38, 40) aufweist, die getrennt voneinander gesteuert werden, an der Zugmaschine angebracht sind und mit einem ersten bzw. mit einem zweiten Bremskreis für eine erste und eine zweite Gruppe von Bremsbetätigungsvorrichtungen (42, 44) verbunden sind, die Rädern auf der einen und anderen Seite der Zugmaschine zugeordnet sind, wobei die Hauptbremszylinder die besagten unabhängigen Druckmittelquellen bilden, die mit der ersten und zweiten Einlaßkammer (22, 34) der Verteilerventileinheit (10) verbunden sind, und wobei die Bremsanlage einen dritten Bremskreis (46) für eine dritte Gruppe von den Rädern des Anhängers zugeordneten Bremsbetätigungsvorrichtungen aufweist, wobei der dritte Bremskreis den Verbraucherkreis bildet, der mit der Auslaßkammer (30) der Verteilerventileinheit verbunden ist.

5. Anwendung der Verteilerventileinheit nach einem der Ansprüche 1 bis 3 bei einer Bremsanlage für ein Fahrzeug, dadurch gekennzeichnet, daß die Bremsanlage einen ersten und einen zweiten Hauptbremszylinder (38, 40) aufweist, die getrennt voneinander gesteuert werden, an dem Fahrzeug angebracht sind und mit einem ersten bzw. mit einem zweiten Bremskreis eine erste und eine zweite Gruppe von Bremsbetätigungsvorrichtungen (42, 44) verbunden sind, die Rädern auf der einen und anderen Seite des Fahrzeuges zugeordnet sind, wobei die Hauptbremszylinder die besagten unabhängigen Druckmittelquellen bilden, die mit der ersten und zweiten Einlaßkammer (22, 34) der Verteilerventileinheit (10) verbunden sind, und wobei die Bremsanlage einen dritten Bremskreis (46) für eine dritte Gruppe von Bremsbetätigungsvorrichtungen aufweist, die mindestens einem Räderpaar auf der einen oder anderen Seite des Fahrzeuges zugeordnet sind, wobei der dritte Bremskreis den Verbraucherkreis bildet, der mit der Auslaßkammer (30) der Verteilerventileinheit (10) verbunden ist.

0 030 883